Europäisches Patentamt

European Patent Office

Office européen des brevets

(11) Publication number: **0 161 578**
A2

(12) **EUROPEAN PATENT APPLICATION**

(21) Application number: **85105287.8**

(22) Date of filing: **30.04.85**

(51) Int. Cl.⁴: **C 04 B 41/85,** C 04 B 33/28, C 04 B 35/10

(30) Priority: **02.05.84 US 606299**
**25.02.85 US 705225**

(71) Applicant: **Rutgers, The State University, Old Queens Bldg., New Brunswick New Jersey 08903 (US)**

(72) Inventor: **Haber, Richard A., 415 Clinton Street, Linden, New Jersey 07036 (US)**
Inventor: **Greenhut, Victor A., 35 Patton Drive, E. Brunswick New Jersey 08816 (US)**
Inventor: **Smoke, Edward J., 11 Edgewood Road, Edison, New Jersey 08817 (US)**

(43) Date of publication of application: **21.11.85**
**Bulletin 85/47**

(74) Representative: **KUHNEN & WACKER Patentanwaltsbüro, Schneggstrasse 3-5 Postfach 1729, D-8050 Freising (DE)**

(84) Designated Contracting States: **AT BE CH DE FR GB IT LI LU NL SE**

(54) **Glass coated ceramic particles.**

(57) Alumina and glass frit are wet mixed, screened, dried and heated to a temperature above the melting point of the glass but below the melting point of alumina. The thus prepared product comprises alumina particles coated with glass. This material is then crushed and rescreened to provide a ceramic powder whose particles have exposed surfaces of glass and alumina. This material, when slip cast in the conventional manner provides a product of substantially greater transverse strength than that known heretofore.

TRANSVERSE STRENGTH

0161578

-1-

<u>RELATED APPLICATIONS</u>

This application is a continuation-in-part of Applicants' copending application, Serial No. 606,299, filed May 2, 1984.

<u>BACKGROUND OF THE INVENTION</u>

The increasing use of ceramics has brought about a search for techniques which preserve the electrical and heat resistant properties of ceramics while at the same time reducing their liability to fracture under given load conditions.

One of the conventionally desirable techniques for producing large ceramic articles, suitably of alumina ceramics, is the technique of slip casting. This technique requires extended particle size distributions in order to form a rheologically stable suspension. This goal can be easily attained in single phase suspensions by controlling the particle size distribution and the flocculant requirements. In order to vary the characteristics of the product however, a second particle phase may be added. Unfortunately however, the addition of such a second phase increases the complexity of a suspension due to competing surface charge effects, different degrees of solubility and variations in the particles size distribution with constituents comprising the suspension which results in rheologically unstable slips. Even in rheologically stable systems, these competing effects are not condusive to intimate mixing. This in turn gives rise to a microstructure of the final ceramic which contains agglomeration, porosity and regions of isolated second and third phases which inherently decrease the properties of the material.

In United States Patent No. 3,360,203 issued December 26, 1967, by Edward J. Smoke and Nicholas H. Snyder, entitled "Prereacting Raw Materials Technique for Attaining High Quality Ceramics", there is described a new method of making a high quality alumina ceramic material approaching 100 percent of its true density through the expedient of rather fine grind and fine particle size distribution, thereby grinding out the voids in the material. In this technique each particle is essentially of the same composition, and when blended by grinding and after batch preparation operations are performed, any compositional discontinuities are thoroughly distributed. This prior art technique also includes the addition of minerals such as talc and clay which do not form second phases or higher within the composition.

The provision of products from the casting of glass and ceramic mixtures is known and disclosed, for example in US patent 3706582 to Meyer. In this type of product however, the glass phase is located at grain junctions. This gives rise to crack propagation along the glass phase. In order to increase the strength of the material therefore, it would be desirable to maintain the low temperature adhesive qualities of the glass, while at the same time achieving the superior interceramic particular bonding.

## SUMMARY OF THE INVENTION

There is provided a novel material comprising composite particles of glass and ceramic wherein a glass coating of homogeneous composition partially covers the ceramic portion of a majority of the particles in said composition. Thus, the majority of the particles should carry at least some glass on the ceramic portion but should not be totally enveloped thereby. The novel materials of the present invention are formed by dry mixing ceramics and glass frit suspending said intimate mixture in an aqueous slurry which is then screened to provide granules of a predetermined size range. These granules are dried and fired to a temperature of between

about 925°C and about 1600°C, soaked at a slightly lower temperature and then cooled to room temperature. The granules which comprise agglomerations of ceramic coated with glass (with of course some dissolution of alumina in the glass) are then reduced in size, suitably by sequential jaw crushing and ball milling in water to provide a fine suspension of the order of about 5 to 10 microns which is then screened and dried. These particles have exposed surfaces of glass and ceramic, thus they may form glass/glass, ceramic/ceramic and ceramic/glass bondings; after subsequent, say, casting and firing. Such products have greater transverse strength than prior art products.

The invention described herein provides novel composite ceramic materials which contain second phase particles in addition to the finely divided alumina particles and methods of making them. Improvements on and changes in the prereaction process revealed in U. S. Patent No. 3,360,203, described above, enable second phase glass particles to be added to alumina or other ceramic raw materials so that composite materials with superior properties can be formed by slip casting and other methods of forming ceramics.

BRIEF DESCRIPTION OF THE DRAWINGS

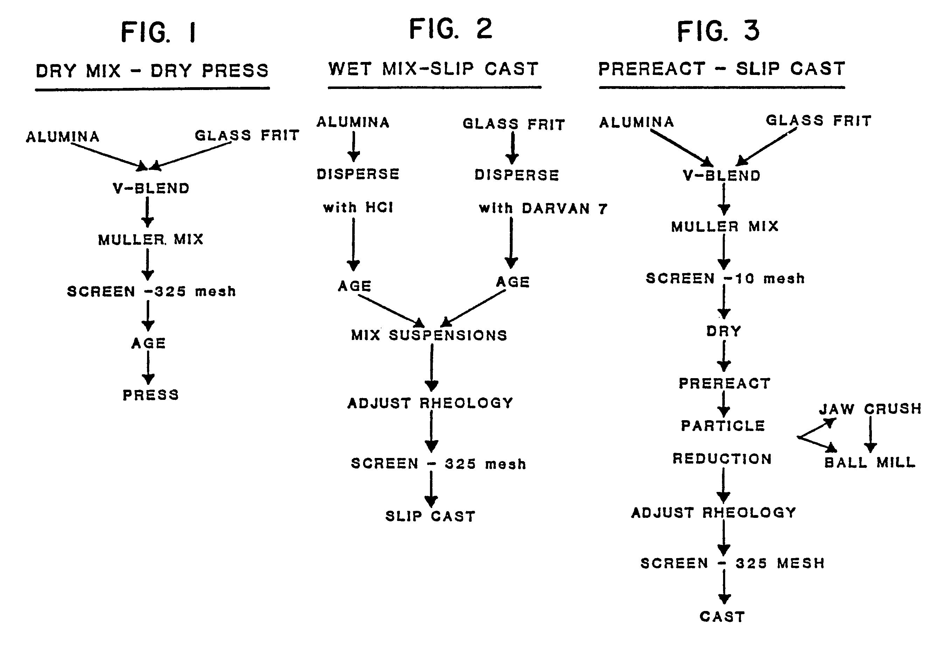

Figure 1 is a flow diagram of the procedures of the prior art comprising dry mixing and dry pressing ceramic and glass frit.

Figure 2 is a further flow diagram of the prior art showing the wet mixing and slip casting of alumina with glass frit.

Figure 3 is a flow diagram showing the formation of pre-reacted composite and the slip casting thereof in accordance with the procedures of the present invention.

-4-

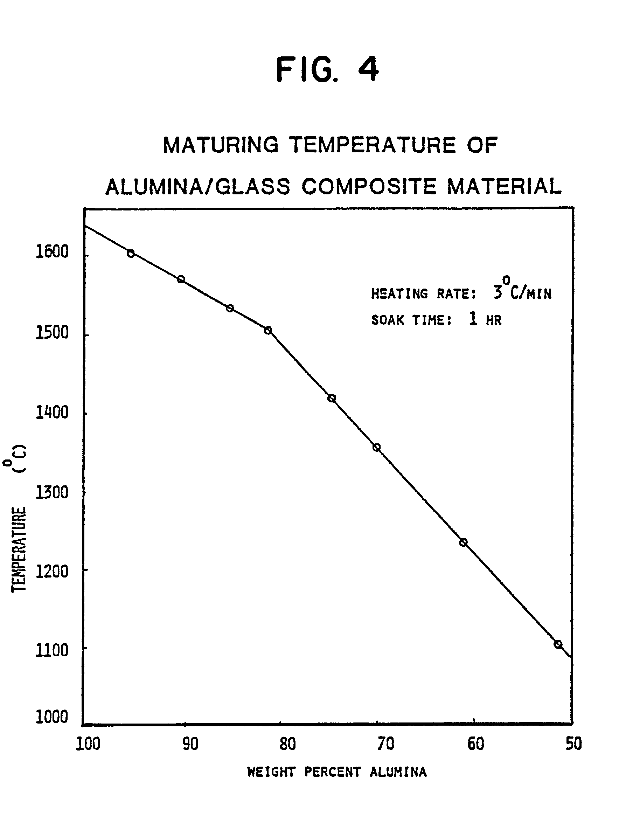

Figure 4 shows the maturing temperature of the alumina and glass composite material after been slip cast for different weight percents of alumina.

Figure 5 is a graph showing transverse strength of alumina/glass composites fired from the procedures of Figures 1, 2 and 3.

Figure 6 is a bar graph showing transverse strengths for certain prior art materials in light shading and pre-reacted materials in accordance with the present invention in black block shading.

Figure 7 is a graph showing transverse strength of certain alumina/glass composites prepared in accordance with the present invention.

Figure 8 is a representational side elevational view of the experimental pressure casting system utilized for slip casting the compositions tested in the present invention.

Figure 9 is the steel retaining structure utilized in the apparatus of Figure 8.

## DESCRIPTION OF THE PREFERRED EMBODIMENTS

The ceramics included in the scope of this invention include all inorganic non-metallic materials of crystalline structure which are solids in the temperature range of about 500 to 2000°C. Further as used herein the term "glass" can be broadly defined as non-crystalline inorganic materials which are solid, that is to say, have substantially no flow properties in at least part of the temperature range between 500°C and 2000°C. It will be understood by those skilled in the art that a very large number of materials fall in both of the foregoing categories.

The most commonly used ceramics contain alumina in some form. It is not necessary for the purposes of this invention that the ceramic be chemically pure. The general standards of materials purity in the ceramic art are to be considered as being applicable herein. The exemplification of this disclosure has been carried out on substantially pure alumina merely because such materials are readily obtainable and scientific measurement upon the properties of pure materials are simpler. This purity however should in no way be considered as limiting upon the invention. Any conventionally available ceramic materials may be employed.

Similarly, with respect to the glasses those skilled in the art are well aware of available compositions of glass and the properties which are associated with various glass compositions. It is the intention of the present invention to make this invention available for use with any glass, depending upon the properties of the final material which it is desirable to obtain. Specifically, the glasses which may be used include fused silics, borosilicates, soda lime silica, germanium glasses, lead glasses, halide glasses and the like. This list is intended to be inclusive but not limiting. Again because of the desirability of scientific measurement of the actual results, the experiments set forth in the present specification have been carried out using glasses which are substantially silica based, that is to say, they contain between about 45 and 100, suitably about 70% by are substantially silica based, that is to say, they contain between about 45 and 100, suitably about 70% by weight of silica. Similarly, they also contain between about 5.5 and about 25% by weight of boron oxide, between about 5 and about 25% by weight of calcium oxide and between about 3.5 and about 25% by weight of sodium oxide. It will be clear to those skilled in the art however, that should the circumstance of the final result justify it, the glass utilized in this invention may contain between 0 and 100% by weight of silica. From the point of view of convenience however, even though the invention is operative using glasses of widely ranging softening points, it has been found practical to utilize glasses having a transition point under 1000°C. This will ensure that the glass will soften and flow at a temperature lower than that of the ceramic component of the mixture.

In the preferred embodiment of the invention, alumina compositions consisting of varied amounts of powders of both alumina and glass frit were first dried in an oven to no less than 300°C, but below the softening point of the glass for no less than 3 hours. These powders were then dry mixed in a twin shell mixer for a period of from .5 to 2 hours, suitably about 1 hour producing a mixed composition. In the preferred embodiment, the mixed compositions tested range from 95 to 50% by weight alumina, with the remainder being glass frit. While the specific ratio of $Al_2O_3$ or other ceramic to glass frit is not critical, it does represent the ranges tested. It should be noted that depending on the desired firing temperature and the desired resulting properties this ratio may change significantly. Once this material was dry mixed it was wet mixed in a Muller or other type mixer with about 10 to about 30% by weight, suitably about 20% of water containing from about 1 to about 5, suitably about 3% by weight of a water retaining agent, forming a wet mixture suitable for screening. As water retaining agents, there may be mentioned sodium alginate. This wet mixture was then screened through a sieve resulting in granules ranging between 6 and 12 mesh. It has been found that if the above mix has additional water added it can be extruded into small rods of approximately the same 6 to 12 mesh size. These granules were then collected in alumina or other saggers and dried.

The saggers containing the agglomerated alumina or other ceramic/glass granules were then loaded into an electric or other furnace and fired at an increasing firing temperature such as a rate of 100-500°C/hr, suitably about 300°C/hr. to a soaking temperature between about 925 and about 1600°C depending on the composition. This soaking temperature is about 100°C less than the temperature to be used to fire products, i.e., formed by slip casting. This latter temperature is referred to as the final firing temperature. The relationship between the final firing temperature on composition expressed as the percentage of glass addition to the composition in the preferred embodiment is shown in Table A.

### TABLE A

#### Preferred Final Firing Temperature for Representative Percentage Glass Additions

| Glass Addition Percent | Final Firing Temperature °C |
|---|---|
| 5 | 1600 |
| 10 | 1575 |
| 15 | 1550 |
| 20 | 1525 |
| 30 | 1200 |
| 40 | 1050 |
| 50 | 925 |

They were then soaked for 2 hours at the soaking temperature. The furnace was then cooled at a rate of decreasing temperature such as 500°C/hr. to room temperature. Once the granular material was cooled it was removed from the furnace. Since the glass frit softens at temperatures much lower than those realized in the prereaction, prefiring soaking range, it is likely that

-8-

the granules of alumina and glass are bonded together. This material was then passed through a jaw crusher to make the resulting material 6-12 mesh.

Since the alumina or other ceramic/glass composition will be used in a slip casting operation, the particle size of the 6-12 mesh granules must be reduced to an average particle size between 5 and 10 microns. This particle size reduction was accomplished by ball milling. Small three gallon capacity high alumina pebble mills were utilized. The grinding media consisted of three different sized 96% alumina pebbles. The mill charge consisted of 60% by volume 1-1/2" balls, 25% by volume 1" balls and 15% by volume 1/2" balls. The mill was filled between 1/2 and 5/8 full with grinding media. Additions of the alumina/glass composition were based on 1750 cm$^3$ of solids and a deionized water volume that would maintain a 78% by weight solids water for the 3 gallon mill. Dispersants successfully utilized include such materials as sodium hexametaphosphate, tetrasodium pyrophosphate.

Milling times ranged from 36 to 48 hours depending on the percent of glasds present or until the specific gravity of the suspension indicated that the minus 325 mesh fraction was at least 76% by weight solids.

The resulting suspension was then screened through a 325 mesh stainless steel sieve, dried and stored until subsequent casting. The resulting prereacted ceramic composite material is highly uniform and rheologically behaves as a single material, i.e., single surface charge. Flocculation problems arising from the solubility of various glasses in water are reduced and/or eliminated as alumina is incorporated into the glass. The prereacted alumina or other ceramic forms a homogeneous material, making control of particle size distribution less complex.

-9-

Since the reactions between the alumina and glass are essentially complete in the first firing, the second firing allows the glass to wet the alumina particles more intimately resulting in a highly uniform material.

The incorporation of a glass or glasses rather than one or more raw materials by this invention yields a very homogeneous composition. Intimate and very complete reactions are possible as the glass wets the alumina particles at high temperature. The control parameters are critical, however, once they are established the resultant material is highly reproducible.

The application of these high quality materials range from macro-to-micro ceramic composites such as: electronic components, ceramic seals, ceramic engine components to ceramic fibers. The increases reactivity of the glassy phase lends itself very well to aluminum metal bonding at reduced temperature.

## EXPERIMENTAL

## EXAMPLE I

### Prereaction of Alumina/Glass Composites

In the prereaction process alumina/glass compostiions consisting of systematic proportions, from 95 wt. % to 50 wt. % $Al_2O_3$ and various glass frits, were dried in an oven for 3 hours at 300°C. The characteristics of these materials are shown on Tables 1, 2 and 3 below. These powders were then cooled to room temperature and dry mixed in a twin shell mixer for a period of 1 hour. After these materials were thoroughly dry mixed, they were wet mixed in a muller type mixer for 30 minutes with 20% by wt. of an aqueous solution of sodium alginate.

This mix was then screened through a sieve resulting in granules ranging between 6 and 12 mesh. These granules were dried in alumina saggers, and subsequently fired in a 12 cu. ft. bottom loading elevator kiln. The furnace was heated at a rate of approximately 300°C/hr. and soaked for 2 hours at a temperature approximately 100°C below the final firing temperatures. Table 4 shows the soaking prereaction temperatures used for the various alumina/glass composites. The furnace was cooled at a rate of 500°C/hr. The prereacted material was removed from the saggers and stored in double polyethylene bags. Because the glass frit softens at temperature well below those realized in the prereaction process, it was found that in some cases the granules of alumina/glass formed large agglomerates. The agglomerations of granules were jaw crushed providing a material that ranged between 6 and 18 mesh.

It was necessary to reduce the particle size of the granules to an average particle size between 5 and 10 um. This particle size reduction was accomplished by ball milling. For this purpose three gallon capacity Lumard high alumina pebble mills were utilized. The grinding media consisted of three different sized 96% alumina pebbles. The mill charge consisted of 60% vol. 1/2 inch

-11-

balls, 25% vol. 1 inch balls and 15% vol. 1/2 inch balls. The mill was filled between 1/2 and 5/8 of capacity with grinding media.

Additions of the alumina/glass composition were based on a ratio of 78% by wt. solids to water for the three gallon mill. Tetrasodium pyrophosphate was added at 0.02% by wt. of the solids as dispersant.

Milling times ranged from 72 to 76 hours depending on the percent glass present. The resulting suspension was then screened through a 325 mesh stainless steel sieve and stored.

### Table 1
#### Nominal Chemical Analysis of A-16 SG Alumina

| Material | Weight Percent |
|----------|----------------|
| $Al_2O_3$ | 99.5 + |
| $Na_2O$ | 0.08 |
| $SiO_2$ | 0.03 |
| $Fe_2O_3$ | 0.01 |

### Table 2
#### Nominal Chemical Compositions of Glass Frits

| | | $Na_2O$ | $K_2O$ | CaO | $Al_2O_3$ | $B_2O_3$ | $SiO_2$ |
|-------|------|-------|-------|-------|-------|-------|-------|
| Glass A | Wt.% | 3.50 | 3.00 | --- | 2.80 | 23.00 | 67.00 |
| Glass B | Wt.% | 6.50 | 0.70 | 14.10 | 10.00 | 14.40 | 54.30 |
| Glass C | Wt.% | 10.40 | --- | 20.0 | --- | 23.30 | 46.30 |
| Class D | Wt.% | 15.80 | 1.80 | --- | 3.90 | 24.00 | 54.50 |
| Class E | Wt.% | 20.46 | 3.53 | 5.88 | 5.85 | 5.93 | 58.29 |

### Table 3
### Thermal Expansion for Alumina and Five Glasses

| Material | Temperature Range (°C) | Coefficient of Thermal Expansion ($10^{-6}$ °C$^{-1}$) | $T_G$ (°C) |
|---|---|---|---|
| Glass A | 100 - 400 | 4.75 | 440 |
| Glass B | 100 - 500 | 7.96 | 565 |
| Glass C | 100 - 500 | 9.60 | 550 |
| Glass D | 100 - 500 | 9.75 | 495 |
| Glass E | 100 - 500 | 13.75 | 525 |
| Alumina | 100 - 900 | 9.10 | ---- |

### Table 4
### Prereaction Soaking Temperature

| Weight Percent Alumina in Composite | Temperature (°C) |
|---|---|
| 95 | 1500 |
| 90 | 1450 |
| 85 | 1425 |
| 80 | 1400 |
| 75 | 1300 |
| 70 | 1200 |
| 60 | 1100 |
| 50 | 900 |

### Example 2

#### Preparation of Slip Casting

Prior to casting, the specific gravity was adjusted to provide a 77-78% by weight solids suspension. The apparent viscosity was adjusted using 1% solution of tetrasodium pyrophosphate to 150-180 centipoise. The volume of slip to be cast was passed through a 20 mesh sieve to remove entrapped air developed during prior processing.

#### Casting Procedures

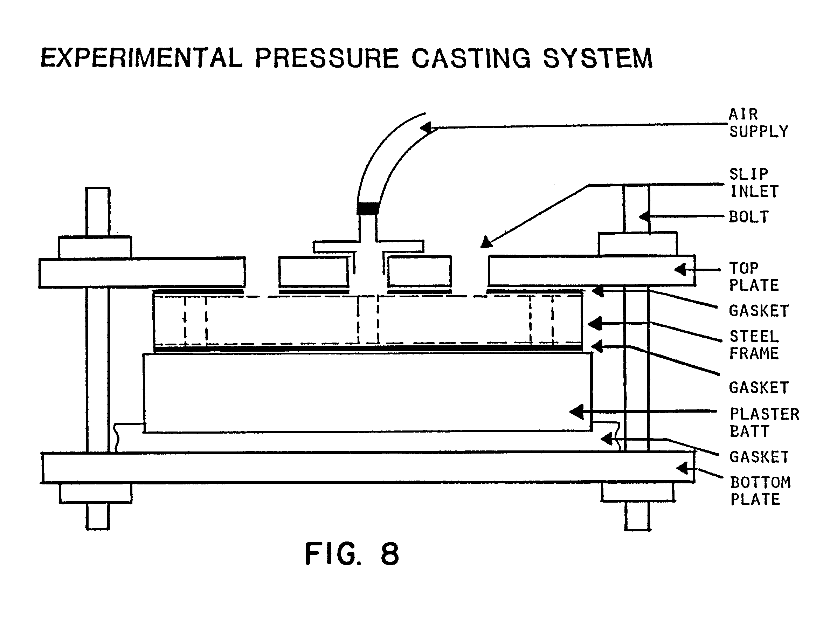

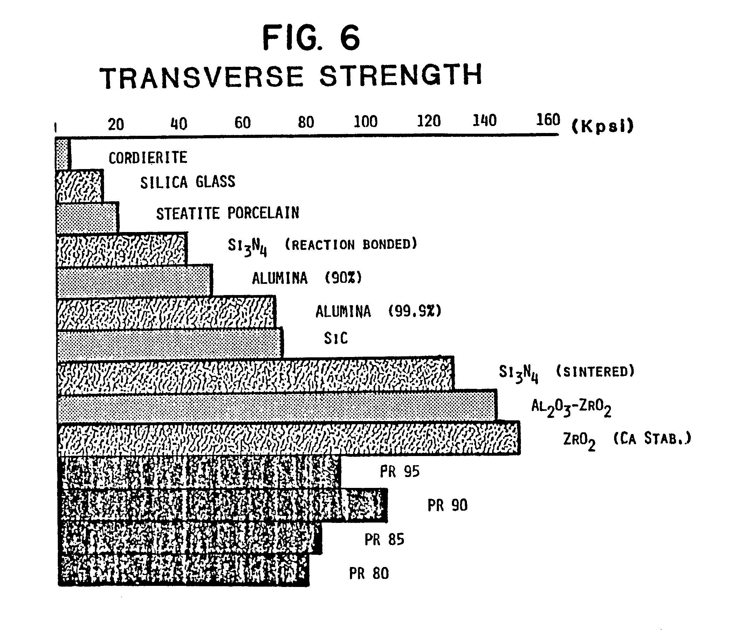

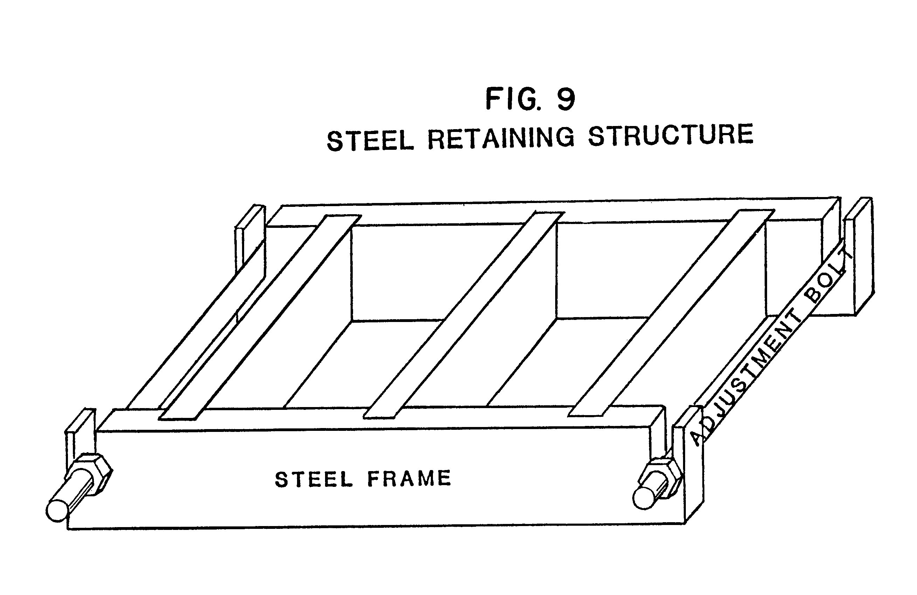

Once the alumina/glass suspensions were rheologically adjusted, the pressure casting system was assembled as shown in Figures 8 and 9. This included premoistening the plaster batts, evenly torquing the support bolts and, finally, pressure testing the system. Provided that no

-13-

leaks were audibly detected, the alumina/glass suspension was then poured into the two separate slip inlets. The inlets were subsequently capped with threaded brass plugs and the pressure applied through the air inlet. Nominally pure $N_2$ at a pressure of 30 psi was used for the entirety of the investigation. The casting time range from 30-60 minutes depending on the composition and condition of the mold.

Once the casting period was complete, the pressure was released and the mold cavities vented through the slip inlets. The top plate and support bolts were removed, the plaster batt and steel support structure disassembled and the cast allowed to set. In all instances the cast rapidly parted from the steel support structure upon shrinkage. The cast tiles were allowed to dry until they parted from the plaster batts easily.

Slip Casting of Unprereacted Alumina/Glass Composites

The procedure for obtaining these stable suspensions of alumina and glass are as follows: separate aqueous dispersions of 75 wt. % alumina and 75 wt. % glass frit were produced. The alumina was dispersed with a dilute HCl solution, while the glass frit was dispersed with Darvan No. 7. Once in suspension, each material was mixed on a high shear mixer for 30 minutes and subsequently allowed to age for one hour. The pH of each dispersion was monitored and maintained between 4 and 5. The alumina and glass suspensions were then added together and mixed for 30 minutes. As needed further additions of Darvan No. 7 were made to adjust slip viscosity to 150-200 centipoise. Prior to casting, the composite slips were screened to minus 325 mesh.

0161578

-14-

<u>Composite Transverse Strength as a Function of Forming Method</u>

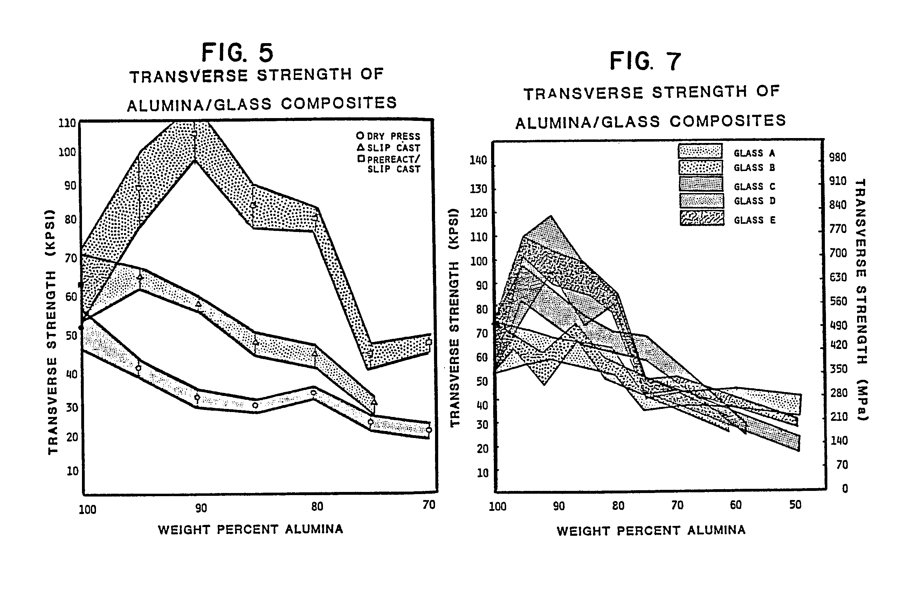

Transverse strengths were determined for 95% by wt. through 70% by wt. alumina/glass C composites. Table 6 lists the strengths of dry pressed and slip cast prereacted and prereacted composites. Figure 5 illustrates the statistical differences between methods. As was observed previously, there were two strength domains in terms of percent alumina. While not as distinct, the first domain, 95 through 75 wt. % alumina, differs from the second or lower percent alumina domain. Maximum strength for both the dry pressed and unprereacted slip cast composites occurred for the 95% alumina composites with values of 37 Kpsi (255 MPa) and 63 Kpsi (435 MPa) respectively. When compared to the strength of the prereacted material, a factor of two increase was observed over similar dry pressed composites.

The transverse strength relative to alumina content is shown in Table 5 and Figure 5.

In accordance with the above procedure the transverse strength is measured for the other composites. The results are shown in Table 6 and illustrated in Figure 7.

-15-

## Table 5
## Transverse Strength of Alumina/Glass Composites

(Glass C)

### Transverse Strength (KSI)

| W/O Alumina | Dry Pressed | Slip Cast | Prereacted (Slip Cast) |
|---|---|---|---|
| 95 | 36923 | 63150 | 89844 |
| 90 | 28105 | 54670 | 105554 |
| 85 | 25166 | 43473 | 84002 |
| 80 | 29708 | 50054 | 79440 |
| 75 | 20847 | 25420 | 39734 |
| 70 | 17862 | ---- | 43773 |

### Statisticasl Variation Based on 95% Confidence and 15 Samples (KSI)

| W/O Alumina | Dry Pressed | Slip Cast | Prereacted (Slip Cast) |
|---|---|---|---|
| 95 | ±2934 | ±7015 | ±17562 |
| 90 | 4246 | 2076 | 14263 |
| 85 | 1395 | 5542 | 15736 |
| 80 | 2041 | 7308 | 5643 |
| 75 | 1603 | 2155 | 4542 |
| 70 | 1598 | ---- | 3071 |

-1-

CLAIMS:

1.    A  material  of  composite particles comprising glass  and ceramic wherein a  glass coating of homogeneous composition  partially  covers  the  ceramic  portion of a majority of the particles in said composition.

2.    A  material  of  claim  1  wherein  the  glass component comprises at least 45% by weight of silica

3.    A  product  of  Claim  2  wherein  the  ceramic comprises between 50 and 95% by weight of the composition.

4.    A  product  of  Claim  2  wherein  the  ceramic comprises between 75 and 95% by weight of the composition.

5,    A material of Claim 2 wherein a ceramic material is alumina.

6,    A composition of Claim 2 wherein the composition of  the  glass  comprises
    between about 45 and about 100% by weight silica,
    between  about  5.5  and  about  25% by weight barium oxide,
    between about 5  and about 25%  by weight of  calcium oxide, and
    between about  3.5 to about  25% by weight  of sodium oxide.

7 .    A product produced by slip casting a composition of  Claim  2  and  maturing  the  same at a temperature of between about 950 and about 1500°C.

-2-

8. A Process of making a composite material of Claim 1 which comprises the sequential steps of:

(1)   dry mixing the ceramic and glass frit;

(2)   preparing an aqueous slurry of said mix;

(3)   screening said mix thru a sieve to provide granules of between about 5 to about 15 mesh;

(4)   collecting and drying said granules;

(5)   soaking said granules to a temperature of between about 900 to about 1500°C;

(6)   cooling the granules and reducing same in size to between about 5 and about 10 microns.

9 .   A process of Claim 8 wherein the size reduction comprises the sequential steps of crushing with a jaw crusher and subsequently ball milling in a water/ dispersant medium.

10.   A process of claim 8 wherein the ceramic is alumina.

11 .   A process of claim 8 wherein the glass of the glass frit comprises at least 45% by weight of silica.

# FIG. 1
## DRY MIX - DRY PRESS

ALUMINA    GLASS FRIT

V-BLEND

MULLER. MIX

SCREEN -325 mesh

AGE

PRESS

# FIG. 2
## WET MIX-SLIP CAST

ALUMINA    GLASS FRIT

DISPERSE    DISPERSE

with HCl    with DARVAN 7

AGE    AGE

MIX SUSPENSIONS

ADJUST RHEOLOGY

SCREEN - 325 mesh

SLIP CAST

# FIG. 3
## PREREACT - SLIP CAST

ALUMINA    GLASS FRIT

V-BLEND

MULLER MIX

SCREEN -10 mesh

DRY

PREREACT

PARTICLE    JAW CRUSH

REDUCTION    BALL MILL

ADJUST RHEOLOGY

SCREEN - 325 MESH

CAST

2/6    0161578

# FIG. 4

### MATURING TEMPERATURE OF
### ALUMINA/GLASS COMPOSITE MATERIAL

HEATING RATE: $3^{\circ}$C/MIN
SOAK TIME: 1 HR

TEMPERATURE ($^{\circ}$C)

WEIGHT PERCENT ALUMINA

# FIG. 5
## TRANSVERSE STRENGTH OF
## ALUMINA/GLASS COMPOSITES

O DRY PRESS
△ SLIP CAST
□ PREREACT/
SLIP CAST

TRANSVERSE STRENGTH (KPSI)

WEIGHT PERCENT ALUMINA

# FIG. 7
## TRANSVERSE STRENGTH OF
## ALUMINA/GLASS COMPOSITES

GLASS A
GLASS B
GLASS C
GLASS D
GLASS E

TRANSVERSE STRENGTH (KPSI)

TRANSVERSE STRENGTH (MPa)

WEIGHT PERCENT ALUMINA

3/6

0161578

# EXPERIMENTAL PRESSURE CASTING SYSTEM

- AIR SUPPLY
- SLIP INLET
- BOLT
- TOP PLATE
- GASKET
- STEEL FRAME
- GASKET
- PLASTER BATT
- GASKET
- BOTTOM PLATE

FIG. 8

# FIG. 6

## TRANSVERSE STRENGTH

20    40    60    80    100    120    140    160 (Kpsi)

CORDIERITE

SILICA GLASS

STEATITE PORCELAIN

$Si_3N_4$ (REACTION BONDED)

ALUMINA (90%)

ALUMINA (99.9%)

SiC

$Si_3N_4$ (SINTERED)

$Al_2O_3$-$ZrO_2$

$ZrO_2$ (CA STAB.)

PR 95

PR 90

PR 85

PR 80